# EUROPÄISCHE PATENTANMELDUNG

(11) **EP 3 470 702 A2**
(43) Veröffentlichungstag der Anmeldung: **17.04.2019**
(21) Anmeldenummer: 18000838.5
(22) Anmeldetag: 11.03.2014
(51) Int. Cl.: F16F 1/393

(54) **AKTIVE, ADAPTIVE SCHWINGUNGSTILGER UND LAGER**

(30) Priorität: 19.03.2013 EP 13001404; 17.09.2013 EP 13004538
(62) Teilanmeldung aus: 14714584.1
(71) Anmelder: FM Energie GmbH & Co. KG, 64646 Heppenheim (DE)
(72) Erfinder: Mitsch, Franz, 64646 Heppenheim (DE)
(74) Vertreter: Benz, Jürgen

(57) **Zusammenfassung**

Die Erfindung betrifft adaptive und aktive Schwingungstilger mit variabler elastischer Steifigkeit, die dadurch gezielt auf in der zu dämpfenden Anlage oder Maschine auftretenden unterschiedlichen Erregerfrequenzen eingestellt und angepasst werden können. Die Erfindung betrifft insbesondere solche erfindungsgemäßen Schwingungstilger, welche einen aktiven Magnet-Erreger aufweisen, der gezielt bei der vorliegenden Störfrequenz arbeitet.

## Beschreibung

Die Erfindung betrifft mit elastischen Mittel ausgestatte Lager und sie enthaltende Schwingungstilger mit variabler also adaptiver Steifigkeit, welche dadurch gezielt auf die in der zu dämpfenden Anlage oder Maschine auftretenden unterschiedlichen Erregerfrequenzen eingestellt und angepasst werden können.

Die Erfindung betrifft insbesondere adaptive und aktive Schwingungstilger mit variabler elastischer Steifigkeit, die dadurch gezielt auf in der zu dämpfenden Anlage oder Maschine auftretenden unterschiedlichen Erregerfrequenzen eingestellt und angepasst werden können. Die Erfindung betrifft insbesondere solche erfindungsgemäßen Schwingungstilger, welche einen aktiven Magnet-Erreger aufweisen, der gezielt bei der vorliegenden Störfrequenz arbeitet.

Die variable Steifigkeit wird dabei durch Einrichten entsprechend platzierter komprimierbarer Freiräume innerhalb des Lagers erreicht, welche gezielt mit Elastomermaterial gefüllt werden können. Die Erfindung betrifft insbesondere solche erfindungsgemäßen adaptiven Schwingungstilger, welche durch unterschiedliche Frequenzen erzeugte Schwingungen zu dämpfen vermögen, in dem die Steifigkeit der elastischen Mittel steuerbar und variable verändert werden kann. Die erfindungsgemäßen Schwingungstilger eignen sich insbesondere für den Einsatz in Windkraftanlagen.

Moderne Windkraftanlagen sind drehzahlvariabel bzw. drehzahlabhängig, so dass es häufig nicht ausreicht, Tilger mit einer festen Eigenfrequenz, welche nur Schwingungen einer bestimmten Frequenz beruhigen können, einzusetzen. Bei drehzahlvariablem Betrieb sind auch die Frequenzen variabel. Störende Schwingungen, die mit den Schwingungstilgern gedämpft werden müssen, entstehen insbesondere in Windkraftanlagen aber auch anderen Anlagen und Maschinen durch die Zahneingriffsfrequenzen von Getrieben und auch durch Rastmomente von Generatoren.

Die im Stand der Technik bekannten Schwingungstilger werden für eine bestimmte Frequenz verwendet. Bei Maschinen mit variabler Drehzahl und damit unterschiedliche Erregerfrequenz ist es nötig die Schwingungstilger an die jeweilige Frequenz anzupassen.

Aus der Physik kommt die Erkenntnis, dass die Frequenzverschiebung die Wurzel aus dem Quotienten der Steifigkeit (gemessen als zu verschiebende Kraft (N/mm) und der Masse ist: ω=√(Federkonstante D/Masse m). Soll zum Beispiel die Frequenz verdoppelt werden, wird die vier fache Steifigkeit benötigt. In der Regel sind sogar größere Spreizungen erforderlich. So wird zum Beispiel zum Erreichen der vier-fachen Frequenz die 16 fache Steifigkeit benötigt. Bereits der Steifigkeitsfaktor 4 ist mit den bekannten Möglichkeiten nicht erreichbar.

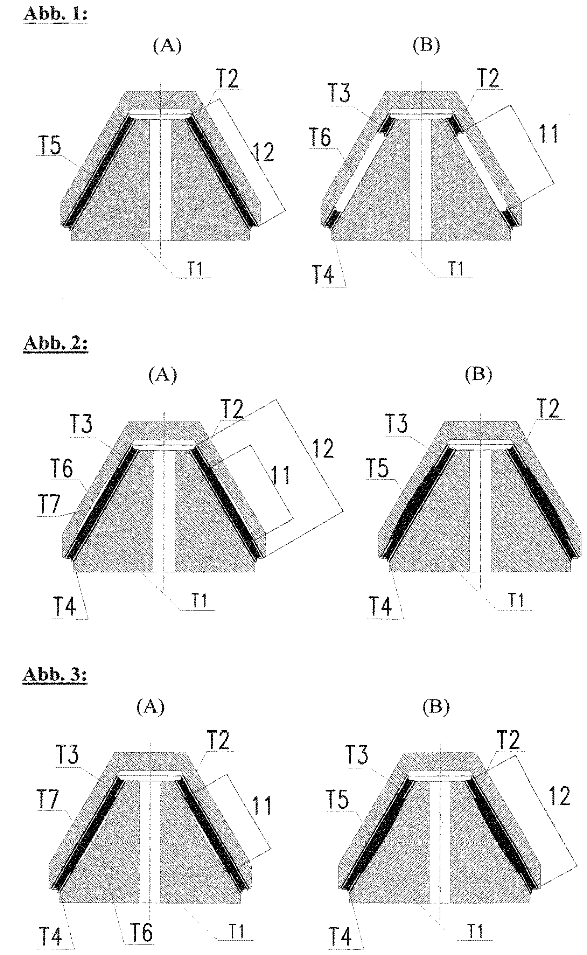

Die Abb. 1 - 3 stellen den grundsätzlichen Aufbau eines rotationssymmetrischen konischen Elastomerbauteils zur Funktionserklärung dar. Ein solches Bauteil besteht aus einem Innenkegel (01), der rotationssymmetrischen Elastomerschicht (05) und einem Außenkegel Position (02). In Abb. 1A ist die Elastomerschicht zwischen den Kegeln durchgängig. Dieses hat eine kaum veränderliche relativ hohe Steifigkeit. Derartige Tilger sind im Stand der Technik beschrieben. In Abb. 1B ist die besagte Elastomerschicht (gegenüber Abb. 1A) mittig unterbrochen, so dass ein Freiraum (06) entsteht. Dieses Bauteil hat eine um ein Vielfaches geringere Steifigkeit als das Bauteil in Abb. 1A. Das Steifigkeitsverhältnis hängt davon ab wie lang die Gummischichten (03) und (04) im Verhältnis zu dem Freiraum (06). (Länge [12-11] zu Länge [12]). Weiterhin hängt das Steifigkeitsverhältnis von der Schichtdicke des Elastomers ab. Man kann somit bei Schichtdicken von ca. 8 mm bei Längenverhältnissen (Länge 12-11 zu Länge 12) zwischen 1,5 bis 5 Steifigkeitsverhältnisse von Faktor 10 bis 60 erreichen. Bei Bedarf können noch größere Steifigkeitsverhältnisse z.B. Faktor 100 erreicht werden. Bei größeren Schichtdicken sind zum Erreichen der gleichen Steifigkeitsverhältnisse größere Längenverhältnisse erforderlich. Da die Gummischichten (3) (4) eine Mindestlänge (Länge =ungefähr Schichtdicke = 5mm-10mm) zur Anbindung der Gummischicht haben müssen, sind dazu entsprechend lange Kegel erforderlich. (für Schicht-Längenverhältnis 8 für Steifigkeitsfaktor 100 gilt: Länge "[12]" = ca. 8*2*Schichtdicke =ca. 128mm). In Abb. 2A ist dieser Freiraum, welcher in Abb. 1B mit (06) bezeichnet ist, teilweise mit Elastomer ausgefüllt. Der Freiraum (06) ist jedoch nach wie vor vorhanden, so dass die Steifigkeit des Bauteiles in Abb. 2A nur unwesentlich höher ist als die Steifigkeit in Bild 1B. In Abb. 2B wurde nun der Innenkegel (01) in Richtung des Außenkegels (02) so weit verschoben, dass der Freiraum (06) geschlossen ist und sich damit eine geschlossene Kontur (05) bildet. Somit ist die Steifigkeit in Abb. 2B so groß wie die in Abb. 1A beschriebene Steifigkeit. Abb. 2 zeigt diese Funktion in der äußeren Grenze des Elastomerkegels, d.h. der Freiraum befindet sich zwischen Elastomer und äußerem Kegel. Abb. 3 zeigt eine ähnliche Funktion, jedoch ist hier der Freiraum zwischen Elastomer und innerem Kegel.

Die Abb. 1 - 3 zeigen in vereinfachter Form die prinzipielle Funktionsweise des erfindungsgemäßen Schwingungstilgers: zwischen maximaler Steifigkeit (Abb. 1A) und geringster Steifigkeit (Abb. 1B) können durch Einrichten von entsprechenden Freiräumen nahezu jede gewünschte Steifigkeit zwischen den beiden Extremen eingestellt werden, und damit Einfluss auf die zu dämpfenden Schwingungsfrequenzen genommen werden.
Die Freiräume können dabei auf verschiedene Weise erzeugt werden: entweder weist die Elastomerschicht zwischen den Kegeln eine Aussparung, beispielweise eine bauchige Aussparung auf, oder aber das entsprechende feste Kegelteil besitzt eine solche rundum verlaufende bauchige, konkave, konvexe oder anderweitig geformte Aussparung oder Hohlstruktur.

Damit das System überhaupt funktionieren kann, muss der betreffende Innenkegel gegen den betreffenden äußeren Kegel verschoben werden. Das kann mittels eines Linearantriebes (Motor mit Spindel), elektromagnetisch, pneumatisch, hydraulisch oder Mischformen von diesen, gegebenenfalls unter Einbeziehung einer elektronischen Steuerung geschehen. Dabei kann sinnvollerweise das entsprechende konische Federelement (Kegelelement) selbst als Hydraulik- bzw. Pneumatik-Element eingesetzt werden.

Definitionsgemäß wird unterer einem Konuslager dieser Erfindung ein Lager verstanden, welches ein Innenkonuselement, und ein Außenkonuselement aufweist, welche durch mindestens eine elastische Schicht miteinander verbunden sind. Beide Konuselement besitzen eine axiale zentrale Bohrung. Eine solches Konuslager wird im Sinne der Erfindung auch als Einfachkonuslager bezeichnet. Ferner kann erfindungsgemäß auch ein Mehrfachkonuslager eingesetzt werden, welches aus einem besagten Außenkonuselement und einem besagten Innenkonuselement sowie einen oder mehreren Zwischenkonuslementen zusammengesetzt ist, welche wiederum alle durch elastische Schichten miteinander verbunden sind. Definitionsgemäß wird ferner unter einer Anordnung von Konuslagern (Einfach- oder Mehrfach-Konulslagern wie definiert) eine Gruppierung von mindestens zwei Konuslagern (Einfach- oder Merhfach-Konuslager) verstanden, welche gegenüber angeordnet bzw. platziert sind und funktionell in Zusammenhang stehen, wobei die Konuselemente entweder mit ihren breiten Basis, oder mit ihrer schmalen Basis gegenüberstehen, oder aber auch so angeordnet sind, dass die breite Basis des einen Konuselementes der schmalen Basis des gegenüberliegenden Konusteils gegenübersteht. Eine solche Anordnung aus zwei Konuslagern wird nach dieser Erfindung auch als Doppel-Konuslager bezeichnet. Die erfindungsgemäßen Schwingungstilger weisen stets mindestens ein entsprechendes Doppelkonuslager auf, können aber auch mehrere Doppelkonuslager besitzen.

Um die gewünschte Adaptivität an die Steifigkeit zu erhalten, sollte der konusförmige Freiraum (06)(103)(308)(802) entlang der Grenzfläche zwischen Elastomerschicht (101)(208)(303)(304)(310) und Innenkegel oder zwischen Elastomerschicht und Außenkegel eine Länge aufweisen, die 20 bis 80%, vorzugsweise 40 - 70% der Länge der Kegel oder der Länge der Elastomerschicht zwischen den Kegeln entspricht. Ebenso sollte der konusförmige Freiraum (06)(103)(308)(802) entlang der Grenzfläche zwischen Elastomerschicht und Innenkegel oder zwischen Elastomerschicht und Außenkegel eine Dicke aufweisen, die 5 - 30%, vorzugsweise 10 - 20% der Dicke der Elastomerschicht zwischen den Kegeln entspricht. Durch diese Geometrien können Steifigkeitsfaktoren von mindestens 4, vorzugsweise > 4, insbesondere zwischen 10 und 150 erzielt werden, was eine Frequenzverschiebung (Erregerfrequenz) um den Faktor 3 - 20, vorzugsweise 3 - 10 zur Folge hat.

Durch die erfindungsgemäßen Lager kann die Steifigkeit vor allem in axialer Richtung (z-Achse) aber auch in radialer Richtung (x, y) adaptiert und variabel eingestellt werden, wobei die radiale Steifigkeit in bei einem festen Konuswinkel nicht so stark beeinflussbar ist wie in axiale Richtung und sich ohne weitere Maßnahmen mehr oder weniger gleichmäßig auf die x- und y-Richtung verteilt. Um eine unterschiedliche radiale x,y-Steifigkeit zu erreichen, kann wie in einer weiteren Ausführungsform gezeigt, die konusförmige Elstomerschicht (101)(208)(303)(304)(310) an einer oder mehreren Stellen einen direkten Zugang (2002) für mechanische oder hydraulische Mittel besitzen, wobei deren Zugang so platziert ist, dass in radialer (x,y) Richtung eine adaptierbare variable Steifigkeit erzielt wird, welche sich unterschiedlich in x- und y-Richtung auswirkt.

Die erfindungsgemäßen Konuslager können zusätzlich weitere Elastomerschichten und weitere Konuselemente aufweisen. Ferner kann der Konuswinkel α eines Konuselements kleiner sein als der Konuswinkel eines anderen Konuselements, so dass durch die unterschiedlichen Kegelwinkel radiale und axiale Schwingungen unterschiedlich beeinflusst werden können.

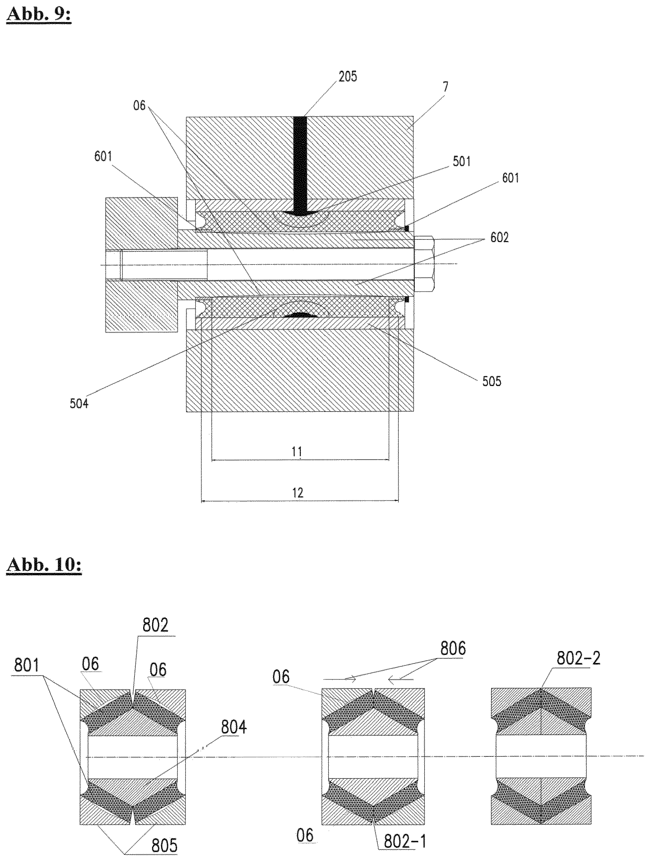

Es ist ferner vorteilhaft, auch weitere Freiräume, die durch Elastomermaterial ausgefüllt werden können, im Lager einzurichten, was zur deutlichen Variabilität der Steifigkeit sowie Erhöhung des Steifigkeitsfaktors führen kann. In einer Ausführungsform der Erfindung können beispielsweise zwei gegenüber positionierte Konuslager so eng zueinander angeordnet sein, dass ein Spalt (802) im unverspannten Zustand vorliegt. Dieser Spalt kann durch Verspannen der Konuselemente des Lagers teilweise oder ganz verschlossen werden, so dass hierdurch die Steifigkeit zusätzlich beeinflusst werden kann (Abb. 10).

In einer üblichen erfindungsgemäßen Ausführungsform weist das Konuslager oder die Anordnung von Konuslagern zwei Konuslager unter Bildung eines Doppelkonuslagers auf, welche gegenüber mit ihrer breiten und / oder kurzen Konusbasis angeordnet sind. Vorzugsweise zwischen den beiden Konuslagern, aber auch an anderen Stellen des Lagers oder außerhalb des Lagers befindet sich erfindungsgemäß eine mechanische, pneumatische, hydraulische oder magnetische Vorrichtung, die es ermöglicht, dass die jeweiligen frei beweglichen Innenkonuselemente oder Außenkonuselemente der beiden Konuslager axial vorzugsweise gegen die jeweiligen fixierten Außenkonuslemente bzw. Innenkonuselemente verschoben werden können, und somit Elastomermaterial in die besagten Freiräume der Lager gepresst werden kann. Die axiale Verschiebung der Konuselemente kann dabei durch hydraulische, pneumatische, mechanische oder magnetische Mittel aktiv oder passiv erfolgen. In einer besonderen Ausführungsform erfolgt die axiale Verschiebung der funktionellen Konuselemente durch ein oder mehrere Flachmagnete vorzugsweise durch aktive Ansteuerung, wie unten näher beschrieben.

Es ist vorteilhaft die erfindungsgemäßen Konuslager oder Anordnungen von Konuslagern mit Sensoren sowie gegebenenfalls elektronische computergesteuerte Einrichtungen auszustatten, welche eine Veränderung der Erregersequenz messen und aus der gemessenen Veränderung der Erregerfrequenz eine automatische Anpassung der Steifigkeit durch axiale Verschiebung der entsprechenden Konuselemente bewirken. Die entsprechende technische Ausrüstung ist im Stand der Technik prinzipiell bekannt.

Die entsprechenden erfindungsgemäßen Konuslager oder Anordnungen von Konuslagern, insbesondere Doppelkonuslagern, sowie die entsprechenden mit diesen Lagern ausgestatten Schwingungstilger können insbesondere zur Dämpfung von Schwingungen in Anlagen und Maschinen mit variabler Drehzahl und / oder Erregerfrequenz, insbesondere in Windkraftanlagen eingesetzt werden.

Das Erfindungsprinzip lässt sich auch prinzipiell auf Tilger und Lager in diesen Tilgern anwenden, welche nicht nur die entsprechenden beschriebenen Doppel- oder Mehrfach-Konuselementen betreffen, sondern auch auf entsprechende Tilger und Lager auf Basis entsprechend ausgestatteter zylindrischer elastischer Doppel- oder Mehrfachbuchsen mit entsprechenden Freiräumen, Spalten, Hohlräumen, welche entsprechend durch Verschieben von inneren und äußeren zylindrischen Buchsen und damit verursachtes Einpressen von Elastomermaterial ganz oder vollständig geschlossen werden können, womit die Steifigkeit adaptiv und geregelt eingestellt werden kann (Abb. 10 - 12)

Die Erfindung betrifft somit auch ein adaptives Buchsenlager oder eine Anordnung von Einfach- oder Mehrfachbuchsenlagern mit an die Erregerfrequenz angepasster Steifigkeit, im Wesentlichen umfassend mindestens ein rotationsymmetrisches unelastisches, vorzugsweise zylindrisches Innen-Buchsenelement und mindestens ein rotationssymmetrisches unelastisches, vorzugsweise zylindrisches Außen-Buchsenelement, welches passend über das Innen-Buchsenelement gesteckt ist, wobei Innenbuchsenelement und Außenbuchsenelement durch eine ein- oder mehrschichtige Elastomerschicht mit einander verbunden sind und jeweils mittig in axialer Richtung eine zylindrische Bohrung aufweisen zur Aufnahme von Befestigungs- oder Verspannungsvorrichtungen, wobei im Bereich der Elastomerschicht entlang der Grenzfläche zum Innenbuchsen- und / oder Außenbuchsenelement ein im nicht verspannten Zustand vorhandener entsprechend der Buchsenelemente geformter rotationssymmetrischer Freiraum vorgesehen ist, der teilweise oder vollständig die Grenzfläche zwischen Außenbuchsen-, und Innenbuchsenelement einnehmen kann, und das Innenbuchsenelement und / oder Außbuchsenelement in axialer Richtung durch technische Mittel und Vorrichtungen im Lager verschiebbar ist, so dass die beiden zylindrischen Buchsenelemente verspannt werden, und dabei der besagte Freiraum durch Kompression und teilweise Verdrängung der vorhandenen Elastomerschicht zwischen den Buchsenelementen teilweise oder ganz geschlossen wird, wodurch die Steifigkeit des Lagers oder Lagersystems entsprechend der zu dämpfenden Erregerfrequenz variiert und angepasst werden kann.

Die erfindungsgemäßen Tilger und Lager, wie folgend näher beschrieben, eigenen sich, wie bereits gesagt, vor allem für ihren Einsatz in Windkraftanlagen. Weitere Einsatzbereiche sind der Fahrzeugbereich insbesondere Drehgestelle und Waggons von Eisenbahnfahrzeugen, landwirtschaftliche Maschinen, Baufahrzeuge, Krane Schiffe Im Antriebsbereich und in der gesamten Schiffshaut und an Anbauteile und inneren Einrichtungen, insbesondere in Personenschiffen.

Es werden hier adaptive Tilger und Lager beschrieben, bei denen die Eigenfrequenz des Federmassesystems durch unterschiedliche Möglichkeiten eingestellt werden kann. Durch die besondere Konstruktion mit entsprechenden positionierten Freiräumen und Spalten können so erfindungsgemäß Steigerungen der Steifigkeit um den Faktor 10 - 150 erreicht werden, was einen ansprechbaren zu dämpfenden Frequenzbereich etwa um den Faktor 3 - 12 entspricht, verglichen mit einem herkömmlichen elastischen Lager oder Tilger des Standes der Technik. Das erfindungsgemäße Lager / Tilgersystem wird in der Regel als Kernstück von Schwingungstilgern, die in einem breiten Frequenzbereich arbeiten sollen, eingesetzt.

Erfindungsgemäß ist es möglich, solche Systeme auch aktiv zu betreiben, also mit Aufbringen einer Kraft in Erregerfrequenz. Der Vorteil dabei ist, dass ein größerer Schwingungstilger Effekt mit gleicher Masse oder ein gleicher Effekt mit deutlich geringerer Masse erzielt werden kann. Gegenstand der Erfindung ist somit auch ein entsprechender adaptiver und aktiver Schwingungstilger, welcher auch aktiv betrieben werden kann.

Aktive Schwingungstilger werden in der Regel mit Tauch-Spulensystemen angetrieben. Bei unserem System, das für kleine Amplituden ausgelegt ist werden Elektro-Zug-Druck Magnete verwendet. Im Gegensatz zu Tauch Spulen lassen diese zwar nur geringe Federwege zu, können jedoch deutlich höhere Kräfte bewirken.

Eine Aktivierung der erfindungsgemäßen Tilger und Lager kann beispielsweise durch zusätzlich angeordnete Elektromagneterreicht werden. Dazu hat sich überraschenderweise herausgestellt, dass Flachmagnete, insbesondere flache Elektro-Zug-Druckmagnete, hierfür bestens geeignet sind im Gegensatz zu den bisher nach dem Stand der Technik bekannten Tauchspulen. Der Vorteil der Flachmagnete ist, dass diese auf kleinem Bauchraum große Kräfte entwickeln können und auch kostengünstiger und weniger sensibel als Tauchspulen sind.

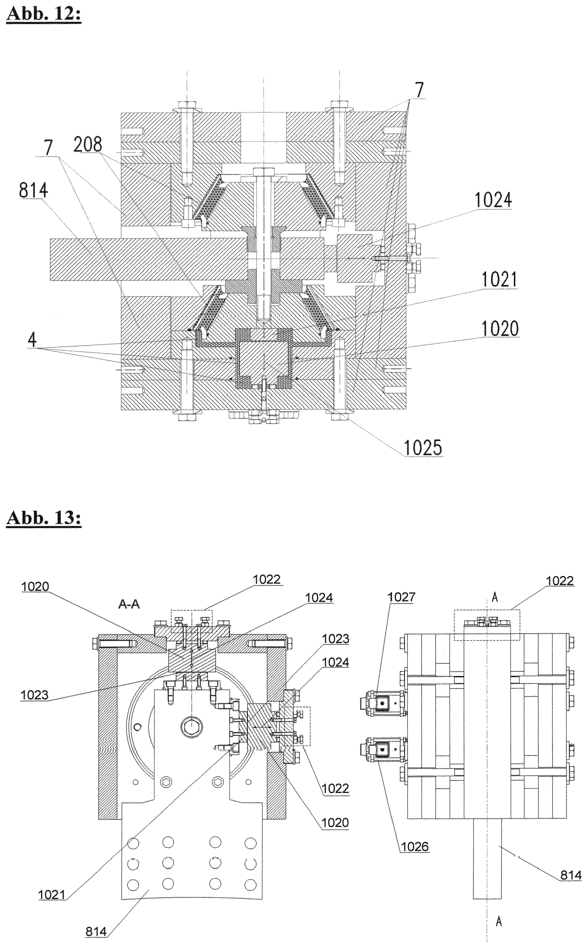

Die erfindungsgemäßen Tilger und Lager in diesen Tilgern können prinzipiell wie folgt geregelt und gesteuert werden:
Adaptives System (Abb. 12, 13): (i) Steuerung des adaptiven Tilgersystems: bei diesem System wird der Druck abhängig von der gewünschten Frequenz über ein Tilgerkennfeld gesteuert. Diese Frequenz ist zum Beispiel von der Drehzahl abhängig. Somit wird der Druck in direkter Abhängigkeit von der Drehzahl gesteuert. (ii) Regelung des adaptiven Tilgersystems: bei diesem System wird ständig die anregende Schwingung und die Schwingung des Tilgers in Phase und Betrag mit einem Beschleunigungs-Sensor gemessen und die Differenz der beiden Phasen Winkel (Phasenverschiebung) ermittelt. Durch die Phasenverschiebung lässt sich das Eigenfrequenzverhalten des Tilgers so bestimmen, dass die Eigenfrequenz des Tilgers der Störfrequenz angepasst wird. Ist die Phasenverschiebung kleiner als ein gewünschter Sollwert, so wird der Hydraulik-bzw. Gas-Druck des Systems erhöht. Ist die Phasenverschiebung größer als der Sollwert so wird der Druck verringert. Diese Abläufe geschehen in kleinen Stufen, so dass ständig nachgeregelt wird. Zwischen Tilger und Hydraulikaggregat sind dazu beispielsweise zwei Ventile (1026) (1027) geschaltet. Zur Erhöhung des Druckes wird das Einlassventil (1026) und zur Senkung des Drucks das Auslassventil (1027) kurzzeitig geöffnet und der Phasenwinkel gemessen. Der Vorgang wird so oft wiederholt, bis der richtige Phasenwinkel (Sollwert) erreicht ist. Mit dieser Regelung können eventuelle Amplituden-, Temperatur- und Frequenzabhängigkeiten oder andere Veränderungen des Tilgers ausgeglichen werden. Außerdem kann sich der Tilger/das Lager Änderungen der anregenden Schwingung anpassen. Wenn sich, z.B., die anregende Schwingung mit der Drehzahl in der Frequenz oder Amplitude ändert, kann die Regelung den Tilger/das Lager so verstellen, dass der vorgegebene Sollwert erreicht wird und so der Tilger/das Lager optimal wirkt. Das zu beruhigende System kann mit einem oder mehreren Tilgern bestückt sein. Ist das anregende System mit mehreren Tilgern bestückt, dann kann ein Tilger geregelt werden und die anderen Tilger sind hydraulisch, pneumatisch oder elektrisch parallel geschaltet und sehen die gleiche Vorspannung wie der geregelte Tilger, müssen also nicht separat geregelt werden. Wird ein System durch viele Tilger beruhigt, dann kann auch jeder Tilger mit eigener Regelung ausgestattet sein.

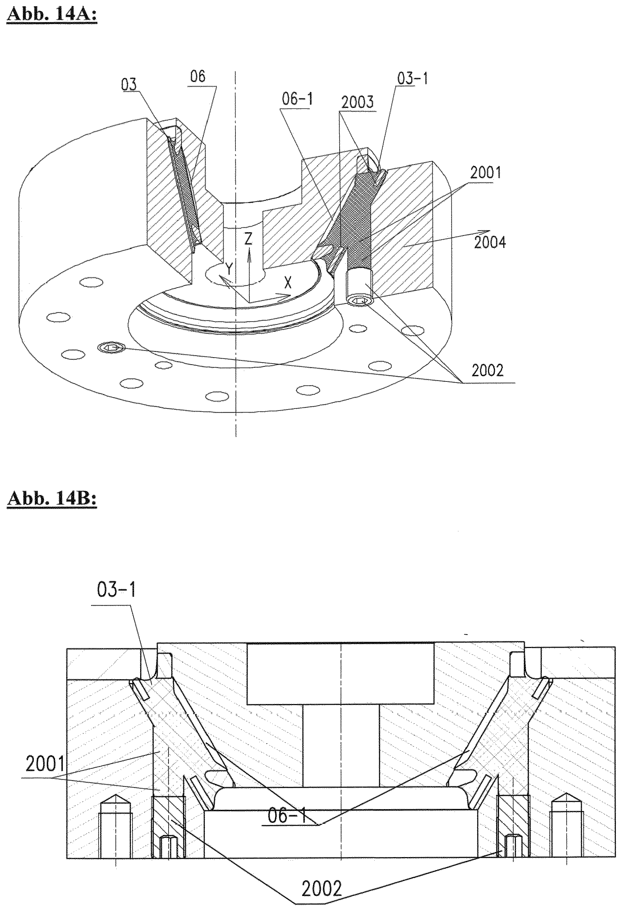

Aktives System (Abb. 13, 14): Parallel zur Regelung des adaptiven Systems wird ein Magnet-Erreger (1020) und (1021) zwischen Schwingungstilger und anregendem System geschaltet und übt damit zusätzliche Kräfte zwischen Schwingungstilger und anregendem System aus. Er wird vorzugsweise bei der ermittelten Störfrequenz betrieben. Die Kraftamplitude und die Phasenverschiebung zwischen der Kraft des Magnet-Erregers und der Schwingung des anregenden Systems muss mittels eines geschlossenen Regelkreises ermittelt werden. Dabei wird das anregende System durch einen Beschleunigungssensor beobachtet und die Kraftamplitude und die Phasenverschiebung so lange geändert, bis der Beschleunigungssensor anzeigt, dass die Schwingung des anregenden Systems minimal ist. Da die Eigenfrequenz des Tilgers durch den adaptiven Regelkreis der Störfrequenz angepasst wird, und der Magnet-Erreger auch bei dieser Frequenz arbeitet, geht nur ein kleiner Kraftanteil des Magnet-Erregers durch die interne Tilger-/Lagerdämpfung verloren. Der verbleibende, größere Anteil kann für die Reduzierung der Systemschwingungen genutzt werden. Alternativ zu dem hydraulischen oder pneumatischen System kann man auch ein elektrischer Linear -Stellmotor eingesetzt werden.

Die erfindungsgemäßen Schwingungstilger und Lager zeichnen sich zusammengefasst, wie folgt aus:
- Steifigkeitsverstärkung durch Schließen des Spaltes, Hohlraumes oder Freiraumes
- Wirksam in radialer und axialer Richtung
- Erhöhung des Steifigkeit maximal um den Faktor 10 - 150, und entsprechend angepasste Erhöhung der Erregerfrequenz maximal um den Faktor 3 - 20.
- Ansteuerbar durch hydraulische, pneumatische oder mechanische Systeme
- Einsatz in Maschinen, in denen eine variable Steifigkeit benötigt wird: z.B. für Radsatzführung bei Schienenfahrzeugen, Windkraftanlagen, insbesondere im Bereich des Getriebes , der Rotornabe, der Gondel und des Turmes. Hierfür werden beispielsweise 4 - 48 entsprechende erfindungsgemäße Tilger, vorzugsweise symmetrisch um die Rotornabe, das Getriebe oder den Turm angeordnet, wobei in einer besonderen Ausführungsform Dualeinheiten von Tilgern zum Einsatz kommen können.
- Bei all diesen Systemen, insbesondere bei Windkraftanlagen, wird der Druck als Funktion der Anregungsfrequenz geregelt. Um die Toleranz, Temperatur- und Alterungseigenschaften der Elastomere auszugleichen, wird die Eigenfrequenz des Tilgers und damit der aufzubringende Druck in Abhängigkeit von der zu tilgenden Betriebsfrequenz und der Phasenlage des Tilgers zur Betriebsschwingung ständig überwacht und geregelt. Dies kann durch elektronische Sensoren computergesteuert manuell oder automatisch durch an sich im Stand der Technik vorhandene Mittel erfolgen. Insbesondere bei Windkraftanlagen können dadurch unterschiedlich auftretende variable Schwingungen permanent gedämpft werde, wodurch auch Belästigungen durch Geräusche und Vibrationen in der Anlage stark reduziert und sogar eliminiert werden können.

Gegenstand der Erfindung ist somit ein aktiver, adaptiver Schwingungstilger für Windkraftanlagen, umfassend (i) einen aktiven Magnet-Erreger, (ii) einen Beschleunigungs-Sensor und (iii) einen geschlossenen Regelkreis,
wobei der Magnet-Erreger zwischen dem Schwingungstilger und dem durch eine Störfrequenz anregenden System geschaltet ist und eine zusätzliche Kraft auf Schwingungstilger und anregendes System ausübt, und der Magnet-Erreger bei der ermittelten Störfrequenz betrieben wird. Üblicherweise ist ein derartiger erfindungsgemäßer Schwingungstilger mit einem mit elastischen Mitteln versehenen Lager von variabler steuerbarer Steifigkeit ausgestattet.

Gegenstand der Erfindung sind auch Windkraftanlagen, in denen die erfindungsgemäßen Schwingungstilger und Lager im Bereich der Rotornabe, der Rotorblätter, des Getriebestranges oder des Turmes angeordnet sind, wobei vorzugsweise 4 - 48, vorzugsweise 6 - 36 Schwingungstilger vorzugsweise im Bereich der Rotornabe vorzugsweise symmetrisch angeordnet sind, um Vibrationen durch Drehzahländerungen von Rotor und / oder Getriebe zu reduzieren.

Kurze Beschreibung der im Text, in den Ansprüchen und in den Abbildungen verwendeten Bezugsgrößen:
- T1: Innenkegel/Innenkonus
- T2: Außenkegel/Außenkonus
- T3: Kegelige Elastomerschicht oben
- T4: Kegelige Elastomerschicht unten
- T5: über gesamte Länge geschlossene Elastomerschicht
- T6: Freiraum

- 1: Elastomerschicht zylindrisch
- 2: Elastomerschicht kegelig
- 3: Zur Versteifung aufzufüllender Freiraum
- 4: Druckkammer
- 5: Druckanschluss
- 6: Befestigung
- 7: Tilgermasse
- 8: Zwischenkegel
- 9: Außenkegel
- 10: Blech kurz
- 11: Länge der kurzen Kegel
- 12: Länge der langen Kegel
- 13: Innenhülse

- 202: Außenkonus
- 203: Druckplatte
- 204: Membran Hohlraum
- 205: Druckanschluss
- 206: Druckelastomer
- 207: Axialklemmung
- 208: Konische Elastomerschicht
- 209: Einstellschraube mit Innensechskant
- 210: Verbindungsschraube

- 301: Masse
- 302: Befestigung
- 303: Elastomerschicht innen
- 304: Elastomerschicht außen
- 305: Druckraum
- 306: Druckanschluss
- 307: Kegel innen
- 308: Freiraum
- 309: Zwischenkegel
- 310: Zylindrische bis leicht konische Außenschicht
- 401: Druckstück
- 402: Schiebeelement
- 403: Elastomer-Verdrängungsvolumen
- 404: Elastomer
- 405: Innenbuchse
- 406: Hydraulikelement

- 501: Ringförmiger Kompressionsraum
- 502: Elastomer
- 503: Innenbuchse
- 504: Ausdehnungsform vergrößert dargestellt
- 505: Außenbuchse

- 601: Endblech Ring
- 602: Achse mit Einschnürung

- 801: Elastomerschicht
- 802: zu schließender Spalt
- 803: Länge der Elastomerschicht
- 804: innerer Kegel
- 805: äußerer Kegel
- 810: Luftbalg zum Aufbringen der axialen Kraft
- 811: Zugplatte für Luftbalg
- 812: Befestigungselement
- 813: Befestigungs- Schraube
- 814: Maschinen Anschluss

- 1020: Elektromagnet Aktuator
- 1021: Elektromagnet Stator
- 1022: Befestigung-und Einstellschrauben für Elektro Magnet
- 1023: Luftspalt
- 1024: Magnet Kraftrichtung radial
- 1025: Magnet Kraftrichtung axial
- 1026: Einlassventil
- 1027: Auslassventil
- 2001: komprimierbares Volumen der Elastomerschicht
- 2002: Vorrichtung zum Komprimieren der Schicht 2001 (z.B. Stellschraube, Hydraulik)

Im Folgenden werden mehrere typische Ausführungsformen des erfindungsgemäßen Tilgers bzw. des erfindungsgemäßen Konuslagers oder auch zylindrischen Lagers beschrieben, ohne dass dabei das allgemeine Erfindungsprinzip eingeschränkt werden soll.

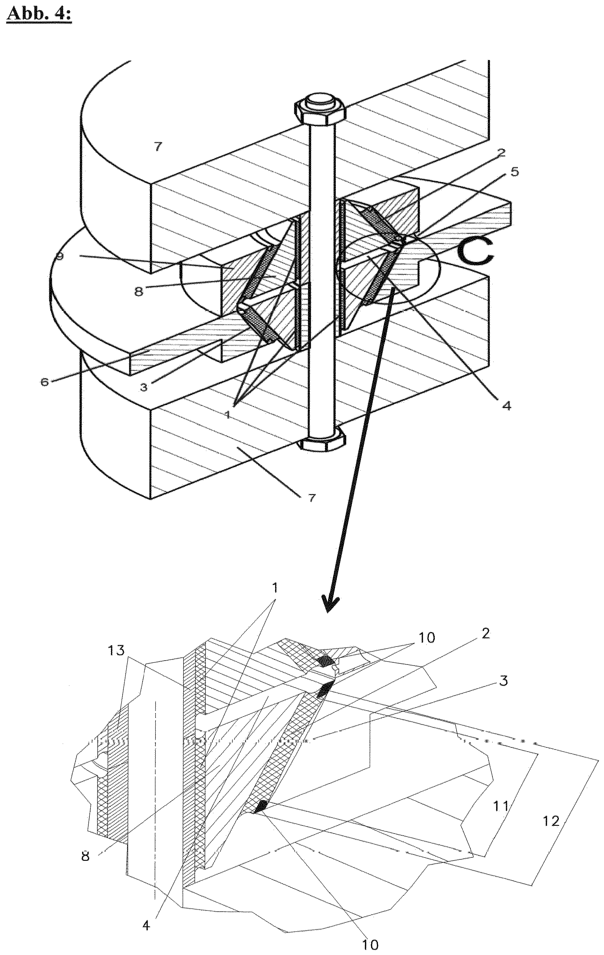

Eine mögliche Ausführung zeigt beispielhaft Abb. 4. Bei dieser Ausführung sind zwei konische rotationssymmetrische Elastomerlager so gegeneinander verspannt, dass zwischen den beiden Elementen ein Hohlraum entsteht. Parallel zur konischen Elastomerfeder ist eine zylindrische Elastomerfeder (1) angeordnet. Diese weist eine hohe radiale Steifigkeit auf, welche deutlich höher ist als die der konischen Elastomerelemente (2). In axialer Richtung ist die Elastomerfeder verschiebbar. Durch diese Anordnung können die beiden Zwischenkegel (8) in axialer Richtung bewegt werden. Die Bewegung wird aktiviert, indem die Druckkammer (4) über einen Druckanschluss (5) mit Druck beaufschlagt wird, so dass sich die beiden Zwischenkegel (8) voneinander weg bewegen und eine Kompression in den Elastomerschichten (2) verursachen. Werden die Elastomerschichten (2) gesteuert komprimiert, so schließt sich der zur Versteifung aufzufüllende Freiraum (3) kontinuierlich bis dieser komplett geschlossen ist. Somit lässt sich die Steifigkeit der beiden Konuslager in radialer Richtung und auch in axialer Richtung deutlich vergrößern. Wie eingangs beschrieben, kann hier Faktor 10 bis etwa Faktor 100 in der Steifigkeit erreicht werden. Die Frequenzverschiebung ist damit ohne weitere Maßnahmen um den Faktor 3 - 10 möglich. Bei der Verwendung sehr langer Gummischichten sind noch größere Faktoren (bis 30) möglich. Vorzugsweise wird als Druckelement Pressluft oder eine Flüssigkeit verwendet. Aufgrund der Situation, dass keine gleitenden Elemente vorhanden sind, kann als Flüssigkeit Wasser, oder auch Wasser-Glykol verwendet werden. Grundsätzlich sind bei Anpassung des Elastomers an die Flüssigkeit alle Flüssigkeiten einsetzbar.

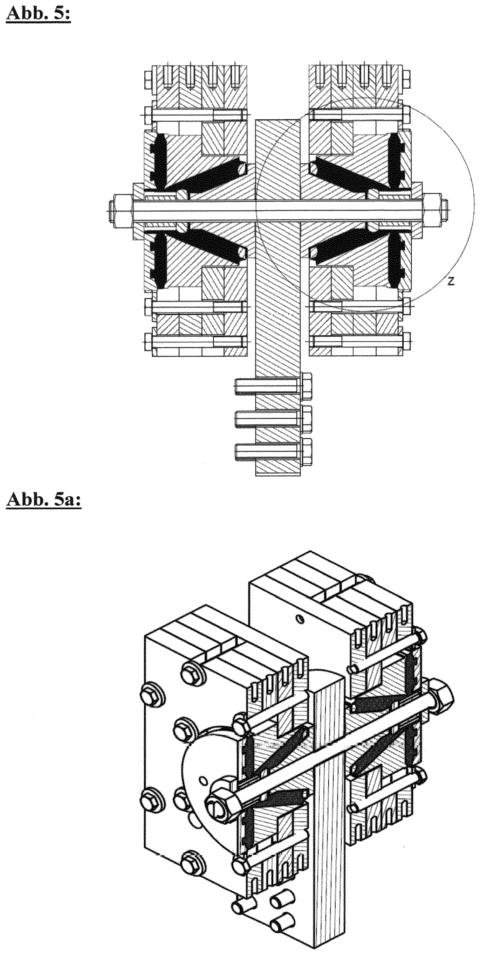

Abb. 5 zeigt beispielhaft die symmetrische Anordnung von 2 Tilgern an einem Maschinenbauteil, wobei hier ein Tilger aus einem Doppelkonuselement, wie beschrieben, besteht, und beide Konusteile, sich mit ihren breiten Basisseiten gegenüberstehen, dass sie ein O-Form bilden. Es ist aber auch prinzipiell möglich, dass in den erfindungsgemäßen Tilgern und Lagern die Konuselemente nicht nur mit ihrer breiten Basis gegenüberliegen, sondern auch mit ihrer kurzen Basis (x-Form). Weiterhin ist es prinzipiell möglich, dass die erfindungsgemäßen Doppel- oder Mehrfachkonuselemente eine gleiche Ausrichtung besitzen.

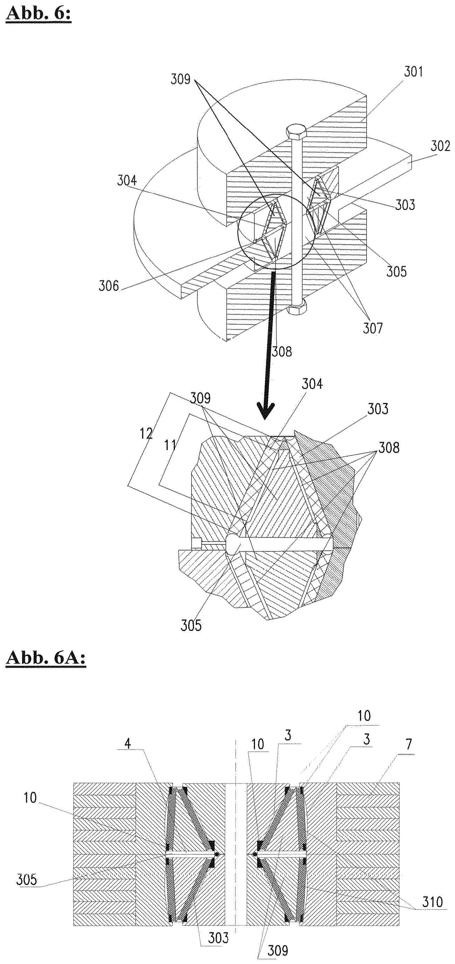

Abb. 6 zeigt einen Schwingungstilger mit doppel-kegeligem Elastomer Element. Dieser ist rotationssymmetrisch und besteht aus der Masse (301), einer Befestigungsplatte (302), einer inneren Elastomerschicht (303) und einer äußeren Elastomerschicht (304) sowie Hohlräumen (308). Sobald ein Druckmedium in die Kammer (305) eingebracht wird, schieben sich die beiden Druckkegel (309) auseinander und verschließen damit die freie Räume (308), so dass die Steifigkeit des Systems, wie bei den anderen Systemen beschrieben, kontinuierlich erhöht wird. Gegenüber dem in Abb. 4 beschriebenen System sind beide Schichten an der progressiven Versteifung beteiligt. Der Nachteil ist der höhere Platzbedarf in radialer Richtung.

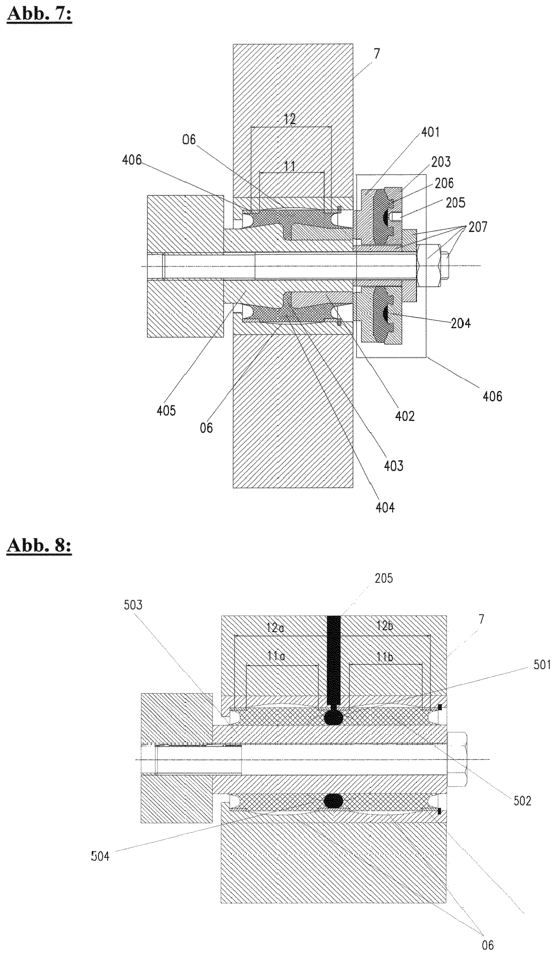

Abb. 7 zeigt beispielhaft ein System, welches nicht konisch sondern zylindrisch ausgeführt ist. Die Wirkrichtung erfolgt vorzugsweise in radialer Richtung. Durch Verschieben des Schiebeelementes (402) wird das Verdrängungsvolumen (403) in das Elastomer (404) eingepresst. Somit verschließt sich der Spalt (06) kontinuierlich, was eine Erhöhung der radialen Steifigkeiten bewirkt. Das Schiebeelement wird von einem Hydraulikelement (406) bewegt. Dabei handelt es sich um ein ähnliches Element wie in Abb. 6. Dieses Element kann wie dargestellt, einschichtig oder auch mehrschichtig sein, so dass größere Wege bewältigt werden können. An dieser Stelle kann auch ein beliebiges Hydraulikelement nach dem Stand der Technik eingesetzt werden.

Abb. 8 zeigt ebenfalls ein buchsenförmiges System. Bei diesem System sind zwei Buchsen hintereinander angeordnet. Zwischen den beiden Buchsen ist ein Hohlraum (501) vorgesehen, der durch Druckbeaufschlagung über den Anschluss (505) das Volumen in einer ähnlicher Form wie in (504) dargestellt, bringt. Somit verschließt sich auch hier wiederrum der Spalt (06) so dass durch den Druck die Steifigkeit steigt.

Abb. 9 zeigt ebenfalls ein rotationssymmetrisches zylindrische Elastomerbauteil, welches einer konventionellen Elastomerbuchse, die einen mittigen Hydraulikanschluss hat, ähnelt. Im Bereich dieses Anschlusses hat die Gummischicht einen ringförmigem Kompressionsraum (501). Dieser wird dadurch erzeugt, dass das Elastomer (502) im Bereich (501) ringförmig keine Verbindung mit der Außenbuchse (505) hat. Somit entsteht bei Druckbeaufschlagung über den Anschluss (205) in dem Bereich (501) die Ausdehnungsform (504), so dass das an dieser Stelle verdrängende Volumen den Spalt (06) schließt was die radiale Steifigkeit erhöht.

Abb. 10 zeigt ein erfindungsgemäßes Lager-/Tilgersystem, bei dem der Druck als Funktion der Anregungsfrequenz geregelt werden kann. Um die Toleranz, Temperatur- und Alterungseigenschaften der Elastomere auszugleichen, wird die Eigenfrequenz des Tilgers bzw. Lagers und damit der aufzubringende Druck in Abhängigkeit von der zu tilgenden Betriebsfrequenz und der Fasenlage des Tilgers zur Betriebsschwingung ständig überwacht und geregelt.

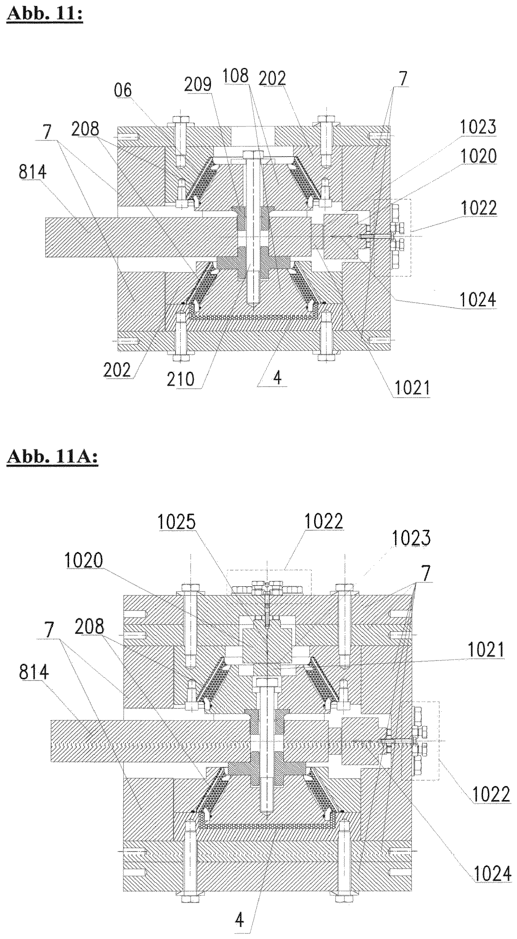

Abb. 11 bis 13 zeigen beispielhaft eine entsprechende Anwendung in einem erfindungsgemäßen adativen/aktiven Tilger, bzw. in einem erfindungsgemäßen Doppelkonuslager. Sie bestehen aus dem Elektromagnet Aktuator (1020) bei dem eine Spule um einen Kern gewickelt ist und aus dem Stator (1021). Zwischen den beiden Bauteilen befindet sich ein Luftspalt (1023) der eine Relativbewegung (1024) und (1025), zwischen (1021) und (1020) zulässt. Diese Teile entsprechen dem Stand der Technik und werden in der Regel zum Antrieb von Schwingförderanlagen eingesetzt. Zur exakten Einstellung des Luftspaltes, der zwischen 0,2 mm bis 1,5 mm (max. 3mm) liegt, kann eine Justier-Vorrichtung (1022) angebracht werden. Ein weiterer Vorteil ist, dass die erfindungsgemäßen Schwingungstilger, die mit solchen Elektro-Zug-Druckmagneten ausgestattet sind, in allen Raumachsen betrieben werden können. Während ein Tauch Spulen-Aktuator keine Querbewegung erfahren darf, hat es bei dem Elektro-Zug-Druck Magneten keine Nachteile, wenn gleichzeitig eine Querbewegung erfolgt. In Abbildung 11 und 13 ist das Zusammenspiel mehrerer Magnete dargestellt. Die Magnete können mit der gleichen Frequenz und der gleichen Phase betrieben werden, können jedoch auch mit unterschiedlicher Frequenz und unterschiedliche Phase in den unterschiedlichen Raumachsen betrieben werden. Insgesamt ist der gleichzeitige Betrieb in allen Raumachsen somit möglich.

Bei dem in Abbildung 11 und Abbildung 12 dargestellten axialen Magnetantrieb wird bei der axialen Bewegung (1025), das in (4) befindliche Druckmedium komprimiert. Für diese axiale Anregung ist es vorteilhaft, wenn das in (4) befindliche Medium kompressibel ist, so dass eine Bewegung möglich ist. Falls eine nicht kompressible Flüssigkeit zur Erreichung der erforderlichen Federkräfte erforderlich ist, muss eine zusätzliche Elastizität vorgesehen werden. Das kann in Form einer Gasblase oder eines sonstigen Federelementes, welches eine federnde Bewegung des Druckmediums (in dem Fall Flüssigkeit) zulässt, ausgeführt werden. Die Anbringung der Magnete erfolgt vorzugsweise in dem nicht Druckbeaufschlagten Raum. Der Magnet (1020), (1021) kann jedoch auch wie in Abb. 12 dargestellt innerhalb des Druckmediums (4)arbeiten.

In Abb. 14 ist ein in zwei Richtungen radial einstellbarer adaptiver Tilger dargestellt:
Die bisher beschriebenen Systeme weisen eine Steifigkeit in der radialen Ebene (X-Y), welche senkrecht zur Achse der Lagerelemente angeordnet ist, auf. Eine im Folgenden beschrieben Vorrichtung ermöglicht auch die Einstellung unterschiedlicher Steifigkeiten in der X-Y-Ebene, wobei dies als statische Voreinstellung beispielsweise mittels mindestens einer Stellschraube oder ähnlicher Vorrichtungen, welche zur Kompression der betreffenden Elastomerschichten führt, oder auch adaptiv, beispielsweise mit einer variablen Hydraulik erfolgen. Die statische Voreinstellung geschieht durch Eindrehen der Stellschraube (2002), wodurch dass Verdränger-Volumen (2001) in das bereits beschrieben System gepresst wird, so dass sich der Spalt (06-1) bereits früher schließt und sich somit in der Richtung des verdichteten Funktionsteils eine höhere Steifigkeit ergibt. In Abb. 24 ist der Spalt (06-01) und (03-01) bereits im ursprünglichen Zustand vergrößert, so dass die X-Richtung vor dem Einschrauben der Stellschraube (n) (2002) eine geringere Steifigkeit erhält. Für eine kleinere Steifigkeitsverschiebung ist eine Stellschraube an einer Seite ausreichend. Für größere Steifigkeitsänderungen können wie in Abb. 14 dargestellt zwei gegenüberliegende Stellschrauben verwendet werden. Wird die Stellschraube (n) 2002 eingedreht, so vergrößert sich die vorher geringere Steifigkeit in X Richtung , so dass sich beide Steifigkeiten zuerst angleichen. Bei weiterem Eindrehen vergrößert sich die Steifigkeit in X Richtung weiter, so dass diese deutlich größer wird als die Steifigkeit in Y - Richtung. Anstelle der Stellschraube können auch andere technische Mittel mit gleicher Funktion eingesetzt werden. Die beschriebene Ausführungsform dient z.B. als Kalibriereinrichtung um unterschiedliche Steifigkeiten der Anschlusskonstruktion in X- und Y - Richtung auszugleichen. Damit werden Frequenzabweichungen von ca. 10% bis 30% korrigiert. Mit Hilfe dieser Ausführungsform ist auch der adaptive Betrieb des Tilgers in zwei Richtungen möglich. Für den adaptiven Betrieb wird die Einstellschraube durch einen Hydraulik Anschluss ersetzt. Eine Vergrößerung des Druckes hat dann eine Vergrößerung der Steifigkeit zur Folge. Damit kann die bisher in der Ebene beschrieben Adaptivität voneinander unabhängig in zwei Richtungen erfolgen. Der Stellbereich dieser zweiten Adaptivität beträgt etwa 50% bis 80 % des gesamten Stellbereiches des adaptiven Systems. Die beschriebenen Ausführungsform kann bei alle in den Abbildungen 11 und 12 beschriebenen Tilgern Anwendung finden..

## Patentansprüche

1. Aktiver, adaptiver Schwingungstilger für Windkraftanlagen, umfassend
(i) einen aktiven Magnet-Erreger,
(ii) einen Beschleunigungs-Sensor und
(iii) einen geschlossenen Regelkreis,
wobei der Magnet-Erreger zwischen dem Schwingungstilger und dem durch eine Störfrequenz anregenden System geschaltet ist und eine zusätzliche Kraft auf Schwingungstilger und anregendes System ausübt, und der Magnet-Erreger bei der ermittelten Störfrequenz betrieben wird.

2. Schwingungstilger nach Anspruch 1, **dadurch gekennzeichnet, dass** der Magnet-Erreger Elektro-Zug-Druckmagnete umfasst.

3. Schwingungstilger nach Anspruch 1 oder 2, **dadurch gekennzeichnet, dass** der Magnet-Erreger flache Elektro-Zug-Druckmagnete umfasst.

4. Schwingungstilger nach einem der Ansprüche 1 - 3, **dadurch gekennzeichnet, dass** der Beschleunigungs-Sensor die anregende Schwingung und die Schwingung des Tilgers in Phase und Betrag misst, und daraus die Phasendifferenz ermittelt wird, wodurch es über den Regelkreis möglich wird, Kraftamplitude und Phasenverschiebung so lange zu ändern, bis die Schwingung des anregenden Systems minimal ist.

5. Schwingungstilger nach einem der Ansprüche 1 - 4, **dadurch gekennzeichnet, dass** er ein mit elastischen Mitteln ausgestattetes Lager von variabler steuerbarer Steifigkeit aufweist.

6. Schwingungstilger nach Anspruch 5, **dadurch gekennzeichnet, dass** das elastische Lager ein Konuslager, eine Anordnung von Konuslagern, ein Doppel-Konuslager oder ein Buchsenlager ist.

7. Windkraftanlage, **dadurch gekennzeichnet, dass** sie einen Schwingungstilger gemäß einem der Ansprüche 1 - 6 aufweist.
